# EUROPÄISCHE PATENTSCHRIFT

(11) **EP 1 424 000 B1**
(45) Veröffentlichungstag und Bekanntmachung des Hinweises auf die Patenterteilung: **18.08.2010**
(21) Anmeldenummer: 03025590.5
(22) Anmeldetag: 08.11.2003
(51) Int. Cl.: A01F 15/08

(54) **Ballenentladevorrichtung einer Rundballenpresse**
Bale discharge device of a round baler
Dispositif pour l'éjection des balles d'une presse à balles cylindriques

(30) Priorität: 26.11.2002 DE 10254954
(43) Veröffentlichungstag der Anmeldung: 02.06.2004
(73) Patentinhaber: DEERE & COMPANY, Moline, Illinois 61265-8098 (US)
(72) Erfinder: Derscheid, Daniel Eric, Ottumwa IA 52501 (US); Viaud, Jean, 70100 Gray (FR)
(74) Vertreter: Magin, Ludwig Bernhard

(56) Entgegenhaltungen:
- EP-A- 0 217 715
- GB-A- 2 292 335
- US-A- 4 162 135
- US-A- 4 683 815
- US-B1- 6 240 712
- US-B1- 6 457 295

## Beschreibung

Die Erfindung betrifft eine Ballenentladevorrichtung einer Rundballenpresse mit einem Träger und einem Ballenaufnehmer.

Im Stand der Technik (DE 33 04 518 C2) bekannte Ballenentladevorrichtungen bestehen aus Rampen, die vertikal schwenkbar an dem Rahmen oder der Achse einer Rundballenpresse angebracht sind und sich aufgrund des Gewichts eines ausgeworfenen Rundballens zum Boden absenken. Ein darauf abgelegter Rundballen rollt hinunter. Gegebenenfalls wird mittels Federn verhindert, dass die Rampen zu schnell absinken, um die Rollbewegung abzubremsen.

Das der Erfindung zugrundeliegende Problem wird darin gesehen, dass insbesondere auf abschüssigem Gelände der Rundballen unkontrolliert wegrollen kann.

Dieses Problem wird in erfinderischer Weise durch die Lehre von Patentanspruch 1 gelöst, wobei in den davon abhängigen Patentansprüchen jeweils vorteilhafte Weiterentwicklungen gelehrt werden.

Auf diese Weise kann der Rundballen nach dem oder beim Verlassen der Presskammer von dem Ballenaufnehmer aufgenommen und mit diesem von dem Pressraum wegbewegt werden, ohne selbst rollen zu müssen. Der höhenbewegliche Träger kann sich gesteuert oder aufgrund der Schwerkraft dem Boden nähern und den Ballen von dem Ballenaufnehmer abkippen oder dergleichen. Der Träger kann ein- oder mehrarmig ausgebildet und schwenkbar, parallelogrammartig oder linear in der Höhe verstellt werden. Der Ballenaufnehmer kann auf dem Träger abrollen, verschoben oder geschwenkt werden. In jedem Fall wird vermieden, dass der Rundballen eine Rampe hinunter und aufgrund seiner Bewegungsenergie z. B. einen Hang hinab rollt.

Die technisch einfachste Art, den Träger vertikal zu bewegen, besteht in der Nutzung einer Schwenkbewegung. Diese wird mittels Fremdkraft gesteuert, damit das Gewicht des Rundballens den Entladevorgang nicht unbeeinflusst ausübt.

Eine horizontale Bewegung des Trägers hat den Vorteil, dass der Rundballen nicht nur hinter, sondern auch seitlich der Rundballenpresse abgelegt werden kann. Ein weiterer Vorteil liegt darin, dass der Rundballen dadurch schnell aus dem Bewegungsbereich einer Auslassklappe herausbewegt und diese sofort nach dem Auslass des Rundballens abgesenkt werden kann. Die horizontale Bewegung kann sowohl mittels einer Schwenkbewegung als auch translatorisch erzielt werden.

Die Lagerung des Ballenaufnehmers mittels Wälzkörpern hat den Vorteil, dass sich dieser alleine aufgrund der Schwerkraft bei entsprechender Neigung zwischen seinen Endstellungen bewegen kann, was z. B. bei einer Gleitlagerung schwieriger wäre. Als Wälzkörper können Rollen, Räder, etc. verwendet werden. Vorzugsweise ist in, an oder auf dem Träger bzw. mehreren Trägern eine Führung für die Wälzkörper vorgesehen.

Der Rundballen kann so auf den Boden abgelegt werden wie er von dem Pressraum angenommen wurde; seine Längsmittenachse kann aber auch um 90 Grad in der Horizontalen geschwenkt werden; schließlich kann er auf seiner Stirnseite seitlich abgelegt werden, wodurch eine Wegrollbewegung zuverlässig vermieden wird.

Das Gewicht des Rundballens kann leicht ermittelt werden, wenn dieser alleine auf dem Ballenaufnehmer ruht oder über dessen Kante abgekippt wird. Die bei letzterem gemessene Lastspitze ist ein sicheres Maß für das Gewicht.

Die Verwendung von Sensoren für den Ballenaufnehmer macht es möglich zu erkennen, ob sich der Ballenaufnehmer überhaupt in einer Ballenannahmestellung befindet und/oder ob der Rundballen wirklich auf dem Boden abgelegt wurde. Hierfür können mechanische Bewegungssensoren wie auch berührungslose Sensoren verwendet werden.

Das Entladen des Rundballens kann dadurch erfolgen, dass der Träger den Ballenaufnehmer in einer vorbestimmten Bahn führt, z. B. eine seitlich geneigt Bahn oder eine am Ablageende abkippende Bahn.

Wenn der Träger wenigstens eine Schiene enthält, ist eine massive Abstützung für den Rundballen gegeben, wenn auch zwei Schienen eine noch sicherere Führung für den Ballenaufnehmer bieten. Eine Teleskopierbarkeit kann einerseits zu einer kurzen Bauweise und andererseits zu einer Ablage des Rundballens weit von der Endladeöffnung führen.

In der Zeichnung ist ein nachfolgend näher beschriebenes Ausführungsbeispiel der Erfindung offenbart. Es zeigt:

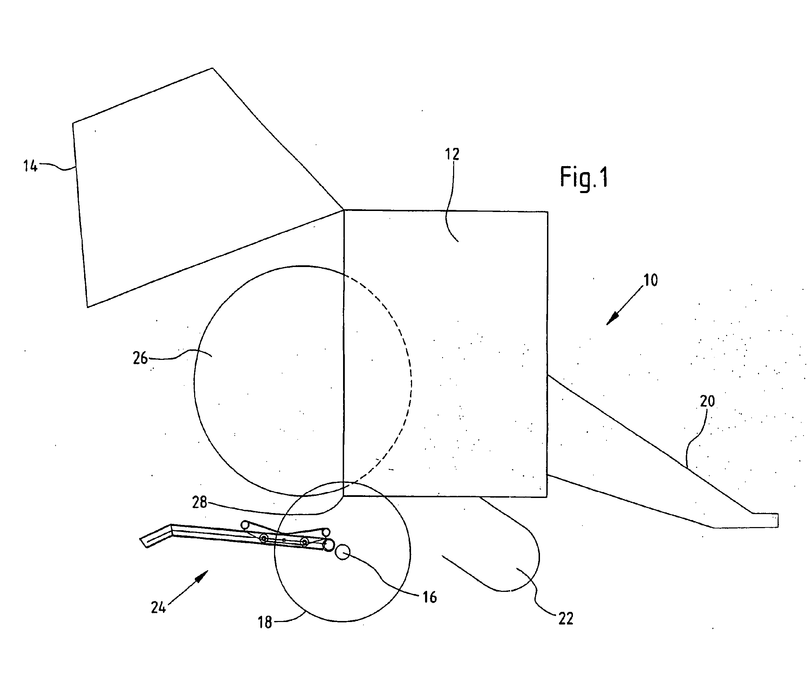

- Figur 1: eine Rundballenpresse mit einer erfindungsgemäßen Ballenentladevorrichtung in einer Aufnahmesituation in Seitenansicht und schematischer Darstellung,

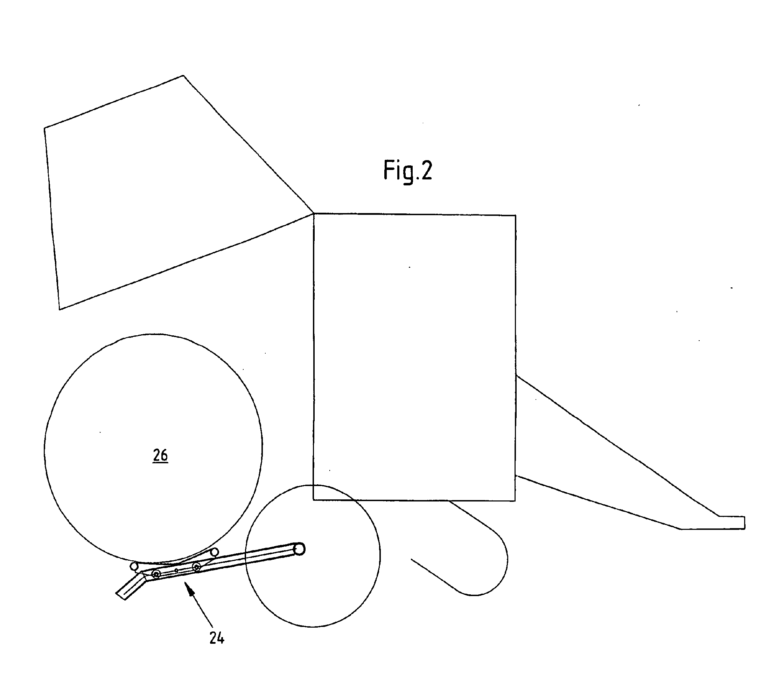

- Figur 2: die Rundballenpresse nach Figur 1 mit der Ballenentladevorrichtung nahe einer Abgabesituation und
- Figur 3: die Ballenentladevorrichtung in einer perspektivischen Darstellung.

In der Zeichnung ist eine Rundballenpresse 10 dargestellt, die ein vorderes Pressgehäuse 12, ein rückwärtiges Schwenkgehäuse 14, eine Achse 16 mit Rädern 18, eine Deichsel 20, eine Aufnahmevorrichtung 22 und eine erfindungsgemäße Ballenentladevorrichtung 24 aufweist.

Die Rundballenpresse 10 ist sehr vereinfacht dargestellt, da es auf deren Aufbau, Funktion und Einzelheiten nur ankommt, soweit dies im folgenden beschrieben wird, während der Rest in vielfältiger und bekannter Weise ausgebildet werden kann. Im Wesentlichen geht es darum, dass ein in der Rundballenpresse 10 gebildeter Rundballen 26 schonend auf den Boden abgelegt wird, sodass sich das Augenmerk auf die Ballenentladevorrichtung 24 richtet, die nachträglich an bestehende Rundballenpressen 10 verschiedenster Bauart angebaut werden kann.

Das vordere Pressgehäuse 12 öffnet sich bei angehobenem Schwenkgehäuse 14 nach hinten und bildet eine untere rückwärtige Kante 28 leicht oberhalb der Achse 16, über die der Rundballen 26 nach hinten aus einem nicht näher bezeichneten Pressraum rollt.

Das rückwärtige Schwenkgehäuse 14 ist vertikal schwenkbar und gibt in einer oberen Stellung den Pressraum frei, so dass der Rundballen 26 nach hinten entweichen kann. In einer nicht dargestellten abgesenkten Stellung befindet es sich geringfügig oberhalb der Ballenentladevorrichtung 24.

Die Achse 16 erstreckt sich quer zu der Fahrtrichtung und dient der Aufnahme der Ballenentladevorrichtung 24 in deren vorderen Endbereich.

Die Räder 18 befinden sich an den äußeren Endbereichen der Achse 16, stützen die Rundballenpresse 10 auf dem Boden beweglich ab und nehmen zwischen sich das Pressgehäuse 12 und das Schwenkgehäuse 14 auf.

Die Deichsel 20 dient dem Anschluss der Rundballenpresse 10 an einem nicht dargestellten Zugfahrzeug und verhindert deren Kippen um die Achse 16 bei der Bewegung des Rundballens 26.

Die Aufnahmevorrichtung 22 nimmt das Erntegut vom Boden auf und fördert es nach hinten und oben in den Pressraum, gegebenenfalls über eine Schneidvorrichtung und einen Querförderer.

Die Ballenentladevorrichtung 24 enthält einen Träger 30 und einen Ballenaufnehmer 32 und dient dazu, einen aus dem Pressraum austretenden Rundballen 26 auf den Boden abzulegen bzw. abzusetzen, ohne ihm eine wesentliche Rollbewegung zu verleihen. Folglich befindet sich die Ballenentladevorrichtung 24 im Anschluss an die rückwärtige Kante 28 und unterhalb des Schwenkgehäuses 14 in einer Stellung, die die Aufnahme des Rundballens 26 zulässt.

Der Träger 30 enthält in diesem Ausführungsbeispiel zwei Schienen 34 und eine Traverse 36, die starr, wenn auch eventuell lösbar, miteinander verbunden sind und gemeinsam schwenken können.

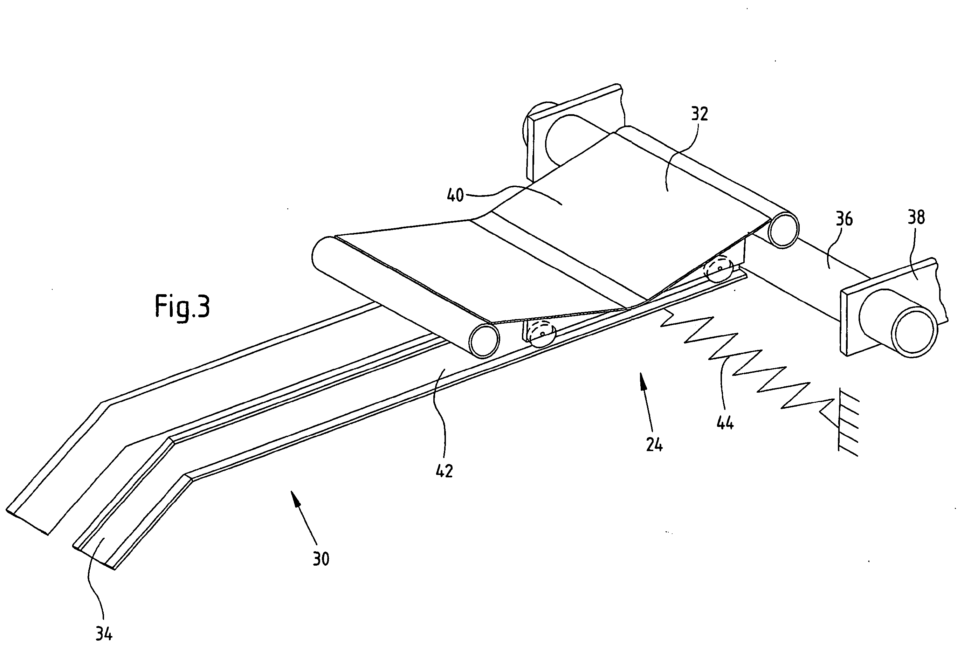

Die Schienen 34 sind als U-Schienen ausgebildet, deren Innenraum sich horizontal nach außen öffnet. Beginnend von vorne, d. h. in Figur 3 von rechts, erstrecken sich die Schienen 34 über circa 5/6 ihrer Länge gerade, während das letzte Sechstel nach hinten und unten unter einem Winkel von circa 45 Grad zum Boden' hin abfällt. Beide Schienen 34 verlaufen zueinander parallel und in einer Außerbetriebsstellung relativ parallel zum Boden.

Es wird darauf hingewiesen, dass auch mehr oder weniger als zwei Schienen 34 verwendet werden können und dass sich der Innenraum auch nach innen öffnen kann und/oder, dass die Schienen 34 ein anderes Profil, bzw. einen anderen Querschnitt aufweisen können, solange eine Gleitoder Rollbewegung des Ballenaufnehmers 32 auf ihnen möglich ist. Darüber hinaus können die Schienen 34 auch teleskopisch ausgebildet sein.

Die Traverse 36 ist mittels Lagern 38 an die Achse 16 vertikal schwenkbar angeschlossen und verläuft zu dieser parallel. Vorzugsweise ist sie als Rohr mit einem runden Querschnitt ausgebildet. Die Traverse 36 dient somit der vertikal schwenkbaren Anlenkung der Schienen 34 und somit der Ballenentladevorrichtung 24 an der Rundballenpresse 10. In abweichenden Ausführungsbeispielen kann die Traverse 36 auch entfallen und die Schiene(n) 34 direkt vertikal schwenkbar an der Achse 16 oder auch an dem Pressgehäuse 12 angebracht sein.

Der Ballenaufnehmer 32 ist im Wesentlichen als ein Schlitten oder Wagen ausgebildet, der auf, in oder an dem Träger 30 beweglich geführt ist. Der Ballenaufnehmer 32 weist hierzu eine Ladefläche 40 und Wälzkörper 42 auf.

Die Ladefläche 40 ist so groß ausgelegt, dass sie einen Rundballen 26 sicher lagern kann und weist eine quer zur Bewegungsrichtung des Ballenaufnehmers 32 ausgerichtete Mulde auf, die den Rundballen 26 vom Herabrollen abhält.

Die Wälzkörper 42 sind an der Unterseite der Ladefläche 40, z. B. in Jochs, Schienen oder sonstigen nicht näher bezeichneten Haltern drehbar aufgenommen und werden in die Innenräume der Schienen 34 eingesetzt, in denen sie beweglich sind. Im montierten Zustand kann also die Ladefläche 40 entlang der Schienen 34 unverlierbar bewegt werden.

Schließlich ist eine Steuervorrichtung 44 für die Bewegung der Ballenentladevorrichtung 24 vorgesehen. Diese ist in der einfachsten und hier benutzten Ausführung als eine Feder ausgeführt, die zwischen dem Träger 30, insbesondere dessen Schienen 34, und der Rundballenpresse 10, insbesondere deren Achse 16, wirkt und den Träger 30 stets nach oben drängt. Diese Steuerung funktioniert wie folgt: Die Ballenentladevorrichtung 24 wird von der Steuervorrichtung 44 nach oben gedrückt und nimmt den über die rückwärtige Kante 28 abrollenden Rundballen 26 auf, der sich in der Mulde festsetzt. Sobald das Schwenkgehäuse 14 weit genug geöffnet ist, dass das Gewicht des Rundballens 26 ungehindert auf die Ballenentladevorrichtung 24 wirken kann, wird sich der Träger 30 mit dem Ballenaufnehmer 32 gegen die Wirkung der Steuervorrichtung 44 nach unten bewegen. Aufgrund der dann gegebenen Neigung des Trägers 30 wird der Ballenaufnehmer 32 nach hinten gleiten und dabei den Rundballen 26 ruhend transportieren. Schließlich wird der nach unten abgewinkelte Endbereich der Schienen 34 den Boden berühren und den Ballenaufnehmer 32 kippen, was zum Ablegen des Rundballens 26 führt. Da sich in dieser Stellung der Ballenaufnehmer 32 unmittelbar über dem Boden befindet, wird der Rundballen 26 mehr abgesetzt bzw. abgelegt als herunter gerollt. Als Folge bleibt der Rundballen 26 liegen und rollt weder eine geneigte Fläche herab noch wickelt sich auf ihn aufgewickeltes Garn ab.

## Patentansprüche

1. Ballenentladevorrichtung (24) einer Rundballenpresse (10) mit einem Träger (30) und einem Ballenaufnehmer (32), wobei der Träger (30) an der Rundballenpresse (10) zur Ablage eines Rundballens (26) vertikal beweglich anbringbar und der Ballenaufnehmer (32) ohne Fremdkraft aufgrund der Neigung des Trägers (30) gegenüber dem Träger (30) aus einer einem Auslass eines Pressraums zugelegenen in eine diesem abgelegene Stellung beweglich ist.

2. Ballenentladevorrichtung nach Anspruch 1, **dadurch gekennzeichnet, dass** der Träger (30) vertikal schwenkbar an einer Achse (16) oder einem Pressgehäuse (12) anbringbar ist und mittels einer Steuervorrichtung (44), insbesondere einer Feder, einem Hydraulikmotor, einem Pneumatikmotor oder dergleichen beaufschlagt wird.

3. Ballenentladevorrichtung nach Anspruch 1 oder 2, **dadurch gekennzeichnet, dass** der Träger (30) auch horizontal beweglich ist.

4. Ballenentladevorrichtung nach einem oder mehreren der vorherigen Ansprüche, **dadurch gekennzeichnet, dass** der Ballenaufnehmer (32) mittels Wälzkörpern (42) auf, in oder an dem Träger (30) beweglich gelagert und geführt ist.

5. Ballenentladevorrichtung nach einem oder mehreren der vorherigen Ansprüche, **dadurch gekennzeichnet, dass** der Ballenaufnehmer (32) horizontal drehbar und/oder vertikal schwenkbar ist.

6. Ballenentladevorrichtung nach einem oder mehreren der vorherigen Ansprüche, **dadurch gekennzeichnet, dass** der Ballenaufnehmer (32) mit einer Wiegevorrichtung versehen ist.

7. Ballenentladevorrichtung nach einem oder mehreren der vorherigen Ansprüche, **dadurch gekennzeichnet, dass** wenigstens ein Sensor zum Erkennen der Lage des Ballenaufnehmers (32) gegenüber dem Träger (30) vorgesehen ist.

8. Ballenentladevorrichtung nach einem oder mehreren der vorherigen Ansprüche, **dadurch gekennzeichnet, dass** die Übertragung einer Bewegung auf den Ballenaufnehmer (32) mittels Zuggliedern oder Gestänge erfolgt.

9. Ballenentladevorrichtung nach einem oder mehreren der vorherigen Ansprüche, **dadurch gekennzeichnet, dass** der Träger (30) im ablageseitigen Bereich eine Formgebung aufweist, die zu einem Kippvorgang des Ballenaufnehmers (32) führt.

10. Ballenentladevorrichtung nach einem oder mehreren der vorherigen Ansprüche, **dadurch gekennzeichnet, dass** der Träger (30) wenigstens eine feste oder teleskopierbare Schiene (34) enthält.

## Claims

1. Bale unloading device (24) of a round baler (10) having a carrier (30) and a bale holder (32), wherein the carrier (30) can be mounted in a vertically moveable manner on the round baler (10) in order to deposit a round bale (26), and the bale holder (32), owing to the inclination of the carrier (30), can be moved with respect to the carrier (30) without extraneous force out of a position close to a baling chamber outlet into a position remote therefrom.

2. Bale unloading device according to Claim 1, **characterized in that** the carrier (30) can be mounted in a vertically pivotable manner on an axle (16) or on a baling chamber housing (12) and is actuated by means of a control device (44), in particular a spring, a hydraulic motor, a pneumatic motor or the like.

3. Bale unloading device according to Claim 1 or 2, **characterized in that** the carrier (30) is also horizontally moveable.

4. Bale unloading device according to one or more of the preceding claims, **characterized in that** the bale holder (32) is guided and mounted moveably by means of rolling bodies (42) on or in the carrier (30).

5. Bale unloading device according to one or more of the preceding claims, **characterized in that** the bale holder (32) is horizontally rotatable and/or vertically pivotable.

6. Bale unloading device according to one or more of the preceding claims, **characterized in that** the bale holder (32) is provided with a weighing device.

7. Bale unloading device according to one or more of the preceding claims, **characterized in that** at least one sensor for identifying the position of the bale holder (32) in relation to the carrier (30) is provided.

8. Bale unloading device according to one or more of the preceding claims, **characterized in that** a movement is transmitted to the bale holder (32) by means of tension elements or a linkage.

9. Bale unloading device according to one or more of the preceding claims, **characterized in that**, in the region on the deposition side, the carrier (30) has a shaping that causes the bale holder (32) to tip.

10. Bale unloading device according to one or more of the preceding claims, **characterized in that** the carrier (30) contains at least one fixed or telescopic rail (34).

## Revendications

1. Dispositif d'éjection de balles (24) d'une presse à balles cylindriques (10) comprenant un support (30) et un dispositif de réception de balles (32), le support (30) pouvant être appliqué de manière déplaçable verticalement contre la presse à balles cylindriques (10) pour déposer une balle cylindrique (26) et le dispositif de réception de balles (32) étant déplaçable sans force extérieure du fait de l'inclinaison du support (30) par rapport au support (30) depuis une position rapprochée d'une sortie d'un espace de pressage dans une position éloignée de celui-ci.

2. Dispositif d'éjection de balles selon la revendication 1, **caractérisé en ce que** le support (30) peut être appliqué de manière pivotante verticalement contre un axe (16) ou un boîtier de presse (12) et est sollicité au moyen d'un dispositif de commande (44), en particulier d'un ressort, d'un moteur hydraulique, d'un moteur pneumatique ou similaire.

3. Dispositif d'éjection de balles selon la revendication 1 ou 2, **caractérisé en ce que** le support (30) est également déplaçable horizontalement.

4. Dispositif d'éjection de balles selon l'une quelconque ou plusieurs des revendications précédentes, **caractérisé en ce que** le dispositif de réception de balles (32) est monté et guidé de manière déplaçable au moyen de corps de roulement (42) sur, dans ou contre le support (30).

5. Dispositif d'éjection de balles selon l'une quelconque ou plusieurs des revendications précédentes, **caractérisé en ce que** le dispositif de réception de balles (32) peut tourner horizontalement et/ou pivoter verticalement.

6. Dispositif d'éjection de balles selon l'une quelconque ou plusieurs des revendications précédentes, **caractérisé en ce que** le dispositif de réception de balles (32) est pourvu d'un dispositif de pesée.

7. Dispositif d'éjection de balles selon l'une quelconque ou plusieurs des revendications précédentes, **caractérisé en ce qu'**au moins un capteur est prévu pour reconnaître la position du dispositif de réception de balles (32) par rapport au support (30).

8. Dispositif d'éjection de balles selon l'une quelconque ou plusieurs des revendications précédentes, **caractérisé en ce que** le transfert d'un mouvement au dispositif de réception de balles (32) s'effectue au moyen d'organes de traction ou de tringleries.

9. Dispositif d'éjection de balles selon l'une quelconque ou plusieurs des revendications précédentes, **caractérisé en ce que** le support (30) présente, dans la région proche du dépôt, une forme qui conduit à un basculement du dispositif de réception de balles (32).

10. Dispositif d'éjection de balles selon l'une quelconque ou plusieurs des revendications précédentes, **caractérisé en ce que** le support (30) contient au moins un rail fixe ou télescopique (34).
